# EUROPEAN PATENT APPLICATION

(11) **EP 3 106 293 A1**
(43) Date of publication of application: **21.12.2016**
(21) Application number: 16174514.6
(22) Date of filing: 15.06.2016
(51) Int. Cl.: B29D 99/00, B29C 70/50, B29C 53/04, B33Y 30/00, B29C 67/00

(54) **METHOD OF MANUFACTURING COMPONENTS, IN PARTICULAR ELONGATED PROFILE SECTIONS FROM BAND-SHAPED PRE-IMPREGNATED FIBERS (PREPREG)**

(30) Priority: 19.06.2015 DE 102015109855
(71) Applicant: Airbus Operations GmbH, 21129 Hamburg (DE)
(72) Inventor: Witte, Tassilo, 21129 Hamburg (DE); Dimroth, Anton, 21129 Hamburg (DE)
(74) Representative: Bird & Bird LLP

(57) **Abstract**

The invention relates to a method of manufacturing components, in particular elongated profile sections, from band-like preimpregnated fibers (prepreg) by the application of a prepreg tape removed from a roll in a feed direction onto a carrier tape moved in a feed direction and application of at least one other prepreg tape removed from a roll onto the applied tape in order to create a multi-layer tape, compression of the prepreg tapes of the multi-layer tape, and subsequent shaping of at least one component. In order to utilize prepreg tape remnants with this method, that would otherwise have to be destroyed as waste, the prepreg tapes on the rolls have different lengths, and when the prepreg tape of a roll is used up, the application of prepreg tape from a new roll onto the same composite layer of prepreg material is continued.

## Description

Fiber-reinforced components such as components in the aircraft industry, for example, are often made from prepreg tapes, i.e., fibers pre-impregnated with synthetic material (synthetic resin, reactive resin) and then cured. To this end, several layers of such prepreg tapes are applied to a form body and this multi-layer composite layer of prepreg tapes is cured. The prepreg tapes are normally 300 mm wide and are removed from rolls which normally hold 500 m long tapes. A continuous prepreg tape is thus used for each layer, i.e., each of the tapes extends continuously over the entire length of the component being manufactured.

Consequently, after the last usable length of a prepreg tape is removed from a roll, a remnant is left thereon that is shorter than the length of the component being manufactured. This remnant therefore can no longer be used for the component and is discarded as waste.

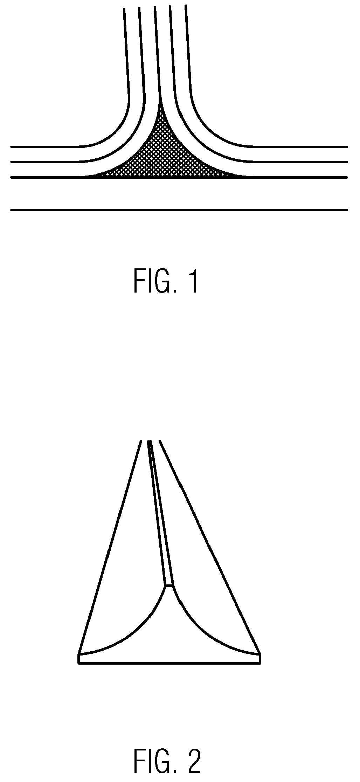

As described in DE 10 2007 042 287 A1, during the shaping of a component, for instance a T-shaped component, from prepreg tapes joined together in a plurality of layers, hollow spaces or so-called gusset areas form in the angled areas. Because these hollow gusset areas are disadvantageous for a number of reasons, as described in the aforementioned publication they are filled before the curing of the prepreg tapes of the shaped component with so-called gusset fillers consisting of, for example, a non-woven material. These gusset fillers have a triangular cross section corresponding to the cross sectional shape of the gusset space, wherein the lateral surfaces of the cross section do not have to be straight. Such a gusset space geometry is shown in Figure 1.

Also known in the prior art for producing gusset fillers is the joining together of pre-specified lengths of prepreg tape into a plurality of layers so as to give rise to a semi-finished product having the same width as the prepreg tapes and having the pre-specified length, from which elongated profile sections with, e.g., triangular cross sections are then produced and can be used as gusset fillers, after cutting to the desired length if needed. Such a finished profile section is shown in Figure 2.

The aforementioned problem, of there being too short a section of prepreg tape for the semi-finished product remaining on the roll, that can no longer be processed and that therefore must be disposed of as waste, arises here as well.

The problem addressed by the invention is that of improving a method of manufacturing components from band-shaped pre-impregnated fibers by application of a prepreg tape removed from a roll in a feed direction onto a carrier tape moved in a feed direction and the application of at least one other prepreg tape removed from a roll onto the applied tape in order to create a multi-layer tape, compression of the prepreg tapes of the multi-layer tape, and subsequent shaping into at least one component, in such a way that with this method, any relatively short prepreg tapes that would otherwise be disposed of as waste can also be processed.

For solving this problem, such a method is configured in such a way that the prepreg tapes on the rolls have different lengths and that when the prepreg tape of a roll is used up, the application of a prepreg tape from a new roll onto the same composite layer of prepreg material is continued.

According to the invention, the composite layers of prepreg tape are thus composed of sections of different lengths, i.e., relatively short tape sections of different lengths can be processed so that tape sections left over from the manufacturing of components from prepreg tapes and destined to be destroyed as waste can still be used. These tape sections or tapes normally have a length of less than 100 m, as well as less than 90, 80, 70, 60, 50, 40, 30, 20, 10 or 5 m.

A longer prepreg tape or a film tape (plastic film) can be used as a carrier tape for the application of the plurality of layers of prepreg tapes. A typical length can be several hundred meters ("endless band"). When using a film tape, said film is separated from the multi-layer tape before the shaping of the component, whereas a carrier tape in the form of a prepreg tape can be further processed with the multi-layer tape.

The fibers of the prepreg tape or tapes are, in particular, uniformly (unidirectionally) oriented along the feed direction of the tape.

The connection between the ends of the prepreg tapes of a composite layer can be end-to-end, since a continuous tape section of another composite layer normally extends in this connection area such that an overall continuous tape structure is obtained.

It is also possible to form the connection between the ends of the prepreg tapes of a composite layer by overlapping, thereby avoiding interruptions within the structure.

The component being formed can be a plate element or preferably an elongated profile element, which for example has a triangular, rectangular, or square cross section so that it can be used in desired geometries, particularly in the aerospace industry, for example for clips, brackets, filler pieces (shims), etc.

To this end, the compressed prepreg tapes can be split into strips parallel to the feed direction and the strips can be shaped into the elongate profiled sections in shaping cavities having the desired cross section and then cured immediately or after insertion into a gusset space.

The compressed prepreg tapes can also be twisted about an axis extending in the feed direction and this twisted strand can be shaped into a triangular cross section. This is particularly advantageous when processing tapes that have a relatively narrow width of a few millimeters, e.g., 6 mm or 20 mm up to 100 mm.

According to the meaning of the present invention, by triangular, rectangular, and square are also meant such cross sections in which the sides (lateral surfaces) are not configured as straight but curved, e.g., inwardly curved as shown in Figures 1 and 2. Furthermore, the "tips" of the cross-sectional shape can have a certain finite extension, as shown for a triangular cross section in Figure 2.

For shaping the twisted strand into a desired cross section, use can be made of a roller assembly, for example a roller assembly having at least one profile roller.

The shaping of the twisted strand can also be effected by pressing between shaping jaws.

The invention will be explained in more detail in the following, with reference to the figures showing exemplary embodiments.
Figure 1 shows a typical triangular gusset space.
Figure 2 shows a typical elongated gusset profile.
Figure 3 shows, schematically and highly simplified, an arrangement for carrying out the method for manufacturing a plurality of triangular, elongated profiled sections simultaneously.
Figure 4 shows, schematically and highly simplified, an arrangement for producing a twisted strand from prepreg tapes.
Figure 5 shows, schematically, different arrangements for shaping the twisted strand into a profile section with a triangular cross section.
Figure 1 shows a component as illustrated in, for example, DE 10 2007 042 287 A1, and Figure 2 shows a component serving as a gusset filler that is inserted into the finely cross-hatched area in Figure 1.

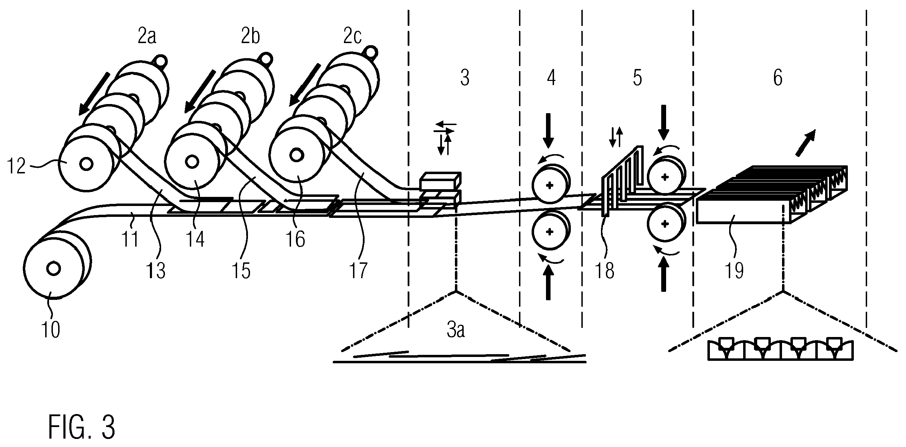

The assembly illustrated in Figure 3 comprises a roll 10, from which a carrier tape 11 is removed in the feed direction, i.e., from left to right in Figure 3. Said carrier tape consists of, for example, a plastic film or a continuous prepreg tape. Several sets 2a, 2b, 2c of rolls holding remnants of prepreg tapes are disposed above the carrier tape 11. Prepreg tape sections 13, 15, 17 are removed from the rolls 12, 14, and 16 and applied to the carrier tape 11 or to previously applied prepreg tape sections, said prepreg tape sections adhering, after impregnation with adhesive synthetic material (resin), to said carrier tape or to said previously applied prepreg tape sections. In addition, and as indicated in 3, a clamp pair is activated when a new end of a prepreg tape is to be applied, in order to join this end tightly with the support (the clamp pair for the tape sections 13 and 15 is not illustrated). When the clamp pair is closed in order to come into engagement with the tape structure, it moves temporarily in the feed direction along with the tape structure and returns to its starting position after release.

The forward feed of the tape structure is generated by bringing the power-driven rollers shown in 4 into engagement with the tape structure.

The other rolls of each roll set 2a, 2b, 2c are moved into the unwinding position, as illustrated for the rolls 12, 14, 16, as soon as the prepreg tape of the respective rolls is used up. The now empty roll is then removed and the next roll is moved in the direction of the arrow and brought into the unwinding position so that prepreg tape is again available for application onto the carrier tape 11 or onto the already-applied prepreg tape, in other words so that the started composite layer can be completed.

As indicated, the connection of prepreg sections within a composite layer is end to end, or overlapping as indicated in 3a. The overlap zone in the feed direction can be up to several millimeters long, e.g., 10 to 50 mm, preferably 30 mm.

Behind the conveyor rollers in section 5 is disposed a cutting mechanism 18 that, in particular if the fibers of the prepreg tapes are oriented in the lengthwise direction, in other words in the feed direction, can consist of a plurality of knife-like cutting elements through which the material can be pulled, but which can also have a plurality of rotating cutting elements or stationary or oscillating cutting elements.

Before the tape produced from a plurality of layers of prepreg material is cut, the carrier tape 11, provided that the latter is made of a plastic film, is removed from the prepreg material in a manner not illustrated. The cutting mechanism 18 is lowered, and then the prepreg material is moved through said cutting mechanism 18 by means of the other conveyor rollers indicated in 5 so that the compressed prepreg tapes are split into strips parallel to the feed direction. These strips are then pressed into form elements 19 having cavities with triangular cross sections and that are open at the top, in order to obtain elongated profile sections with triangular cross sections. After applying one or more suitable cover plates (not shown), the gusset fillers can then be heat-treated at a higher temperature than room temperature (e.g., in the range of 60 to 80°C) for improved formability. However, the temperature should be lower than the temperature at which the respective resin system being used would polymerize. These profiled sections, cut to the proper length as needed, serve as gusset fillers.

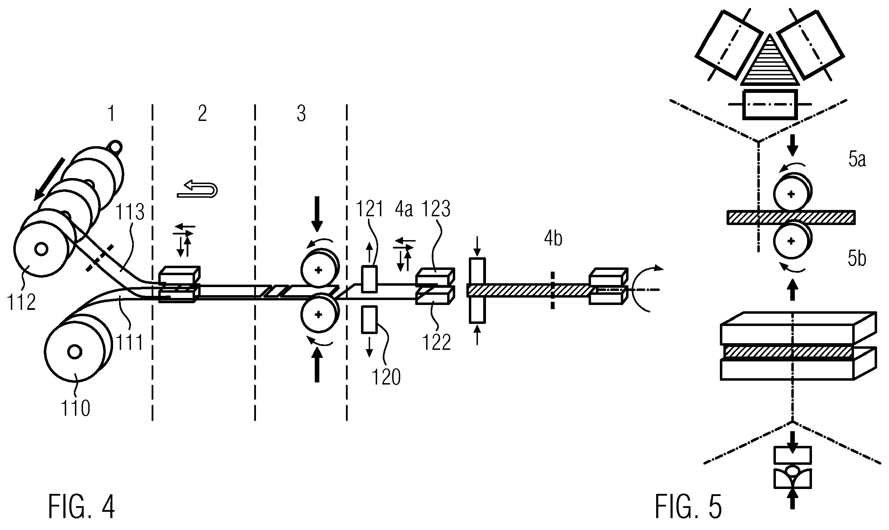

The assembly according to Figure 4 is preferably used for processing remnants of prepreg tapes that are narrower (6 mm or 20 mm to 100 mm wide, for example) than normal prepreg tapes. Although there can be a plurality of rolls, as shown in Figure 3, only one set of rolls with prepreg tape remnants is indicated in the illustration. However, wider tape remnants can also be processed according to the principle illustrated in Figure 4, although they must first undergo a cutting process.

As in Figure 3, a carrier tape 111 is removed from the roll 110 in the feed direction (from left to right in the figure), onto which a prepreg tape 113 from the roll 112 is applied and adhesively fastened by its front end onto said carrier tape by means of the clamping jaws indicated in 2. The carrier tape and the prepreg tape applied thereon are conveyed by means of feed rollers, which are indicated in 3.

Here as well, the roll 112 is removed after the prepreg tape 113 is used up and the next roll in the sequence is moved into the position for removal of prepreg tape. The front end of this new tape is then fastened onto the carrier tape 111, also by means of the clamping jaws. This gives rise to an end-to-end connection or to a desired overlapping of the applied tape sections, although an overlapping connection can be provided here as well.

After running through the feed rollers indicated in 3, the carrier tape 111, if it is made of plastic film, is removed from the tape composed of prepreg tapes and this [composite] prepreg tape is gripped by the schematically indicated clamping jaws 120, 121 and 122, 123 disposed at a distance from one another and cut off from the subsequent tape. While the clamping jaws 120, 121 are holding the back end (in the Figure) of the cut-off tape section, the clamping jaws 122, 123 are turned about the longitudinal axis extending in the feed direction of the tape section, as indicated by the arrow, such that the section composed of prepreg tapes is twisted.

After the twisting, the clamping jaws return to the starting position shown in 4a in order to twist the subsequent section composed of prepreg tapes.

The cross section of the twisted section is then shaped into a desired, e.g., triangular, shape. This can be brought about by, for example, shaping rollers as indicated in 5a of Figure 5, wherein, to create the triangular shape, use is made of either three shaping rollers or two oppositely disposed shaping rollers, one of which having a smooth surface and the other of which having a circumferential recess with a triangular cross section. This embodiment is especially well-suited for a continuous process.

The shaping of the twisted strand can also be effected by compression between two suitably shaped forming jaws, as indicated in 5b. This embodiment is especially well-suited for a noncontinuous process.

## Claims

1. A method of manufacturing components from band-like, pre-impregnated fibers (prepreg) by the application of a prepreg tape (13; 15; 17; 113) removed from a roll in a feed direction onto a carrier tape (11; 111) moved in a feed direction and application of at least one other prepreg tape (15) removed from a roll onto the applied tape (13) in order to create a multi-layer tape, compression of the prepreg tapes of the multi-layer tape, and subsequent shaping into at least one component, **characterized in that** the prepreg tapes (13, 15, 17; 113) on the rolls have different lengths and that when the prepreg tape of a roll is used up, the application of prepreg tape from a new roll onto the same composite layer of prepreg material is continued.

2. The method according to claim 1, **characterized in that** a prepreg tape is used as a carrier tape.

3. The method according to claim 1, **characterized in that** a film tape is used as a carrier tape.

4. The method according to any one of claims 1 through 3, **characterized in that** the connection between the ends of the prepreg tapes of a composite layer is end-to-end.

5. The method according to any one of claims 1 through 4, **characterized in that** the connection between the ends of the prepreg tapes of a composite layer is overlapping.

6. The method according to any one of claims 1 through 5, **characterized in that** at least one elongated profile section is manufactured by shaping.

7. The method according to claim 6, **characterized in that** the profiled section has a triangular, rectangular, or square cross section.

8. The method according to claim 7, **characterized in that** the compressed prepreg tapes (13, 15, 17) are split into strips parallel to the feed direction and the strips are shaped into the elongated profile sections in shaping cavities having the desired cross section, and cured.

9. The method according to claim 7, **characterized in that** the compressed prepreg tapes are twisted about an axis running in the feed direction and the twisted strand is shaped into a desired cross section.

10. The method according to claim 9, **characterized in that** a roller assembly is used for shaping the twisted strand.

11. The method according to claim 10, **characterized in that** the roller assembly has at least one profile roller.

12. The method according to claim 9, **characterized in that** the shaping of the twisted strand is effected by pressing between forming jaws.

13. The method as in any one of the preceding claims, **characterized in that** the resulting component is further processed in a method for the manufacturing of airplanes, helicopters, spacecraft, space stations, satellites or carrier rockets, or components thereof.
